# EUROPÄISCHE PATENTSCHRIFT

(11) **EP 2 099 634 B1**
(45) Veröffentlichungstag und Bekanntmachung des Hinweises auf die Patenterteilung: **04.08.2010**
(21) Anmeldenummer: 07821234.7
(22) Anmeldetag: 12.10.2007
(51) Int. Cl.: B60K 28/06, B60W 50/08

(54) **VERFAHREN UND ANORDNUNG ZUR WARNUNG DES FAHRERS**
METHOD AND ARRANGEMENT FOR PROVIDING A WARNING TO THE DRIVER
PROCEDE ET SYSTEME D'AVERTISSEMENT D'UN CONDUCTEUR

(30) Priorität: 06.12.2006 DE 102006057424
(43) Veröffentlichungstag der Anmeldung: 16.09.2009
(73) Patentinhaber: Robert Bosch GmbH, 70442 Stuttgart (DE)
(72) Erfinder: FLICK, Bernd, 31199 Diekholzen (DE)
(86) Internationale Anmeldenummer: PCT/EP2007/060867
(87) Internationale Veröffentlichungsnummer: WO 2008/068092

(56) Entgegenhaltungen:
- EP-A- 1 418 082
- WO-A-2005/070727

## Beschreibung

### Stand der Technik

Die Erfindung geht aus von einem Verfahren zur Warnung des Fahrers in Abhängigkeit des Fahrerzustandes. Zur Erkennung des Fahrerzustandes und dessen Warnung insbesondere bei Gefahr des Einschlafens sind gattungsgemäße Videosysteme bekannt, die beobachten, wie lange der Fahrer beim Fahren die Augen geschlossen hält (JP-10315799 A) und bei Überschreiten einer Schwelle den Fahrer durch einen akustischen Warnton aufwecken bzw. im Wachzustand halten. Ein ähnliches Videosystem zur Augenbeobachtung des Fahrers ist aus der EP 1 418 082 A1 bekannt.

### Offenbarung der Erfindung

### Vorteile der Erfindung

Das Verfahren mit den Merkmalen des Anspruchs 1 bzw. die Anordnung mit den Merkmalen des Anspruchs 5 hat den Vorteil, dass der Fahrer ohne Videobeobachtung unmittelbar gewarnt wird, wenn er den Kopf kurz zur Seite oder nach vorne fallen lässt. Die Erfindung verhindert somit wirksam den sogenannten Sekundenschlaf, der häufig tödlich endet. Es sind keinerlei Auswerteeinrichtungen notwendig oder Aktivierungsmechanismen zur Ausgabe eines Warnsignals. Daher ist das Verfahren sicher und resistent gegen spontan auftretende Störungen von Auswerteeinrichtungen und Warnsignalgebern.

Die Erfindung macht von der Erkenntnis Gebrauch, dass bei Einbringung des Kopfes des Fahrers in eine stehende akustische Welle derart, dass bei einer Sollposition des Kopfes die Ohren des Fahrers in Schwingungsknoten der stehenden Welle zu liegen kommen und ein Signal durch die stehende akustische Welle vom Fahrer nicht wahrnehmbar oder störend ist. Bewegt der Fahrer hingegen seinen Kopf gegenüber der Sollposition und ist damit außerhalb eines Schwingungsknotens der stehenden Welle, nimmt er ein akustisches Warnsignal durch die stehende Welle wahr, welches in einem Schwingungsbauch der stehenden Welle am lautesten ist.

Vorzugsweise werden zur Erzeugung der stehenden Welle zwei Lautsprecher in einem definierten Abstand gegenphasig angesteuert, im einfachsten Falle von einem Sinuston.

Wird die akustisch stehende Welle bzw. der Sinuston mit einer Frequenz erzeugt, bei der das menschliche Ohr am empfindlichsten ist, z.B. bei 1KHz, muss relativ wenig Energie für das Aufwecken bzw. die Erhaltung des Wachzustandes aufgewendet werden.

Zum Abgleich der Sollposition des Kopfes wird vorzugsweise der Körperschall berücksichtigt, der als Störgröße durch Einbringung des Kopfes in die stehende Welle (abweichende Ausbreitungsgeschwindigkeit des Schalls) auftritt.

Zweckmäßig können die Erreger/Lautsprecher der stehenden Welle im Bereich oder in der Fahrerkopfstütze des Fahrzeugs und/oder in der fahrernahen B-Säule angeordnet sein. Damit sind keine zusätzlichen Vorrichtungen zur Unterbringung und Fixierung der Erreger /Lautsprecher notwendig und die Sollposition kann präzise voreingestellt werden.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 zwei gegenphasige Sinustöne der gleichen Frequenz,
Figur 2 die Addition dieser beiden gegenphasigen Sinustöne mit Schwingungsknoten und Schwingungsbäuchen und symbolischer Darstellung der Ohren in den Schwingungsknoten.

### Ausführungsformen der Erfindung

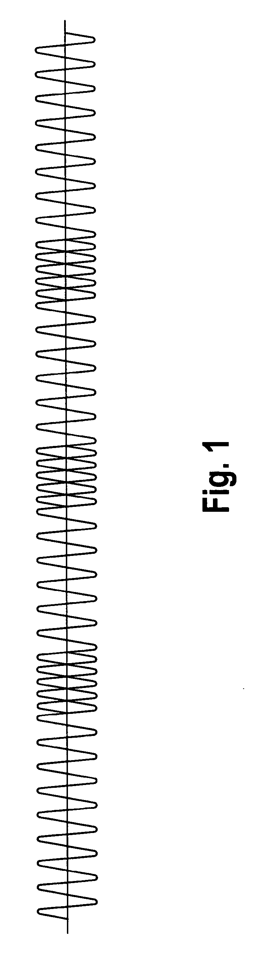

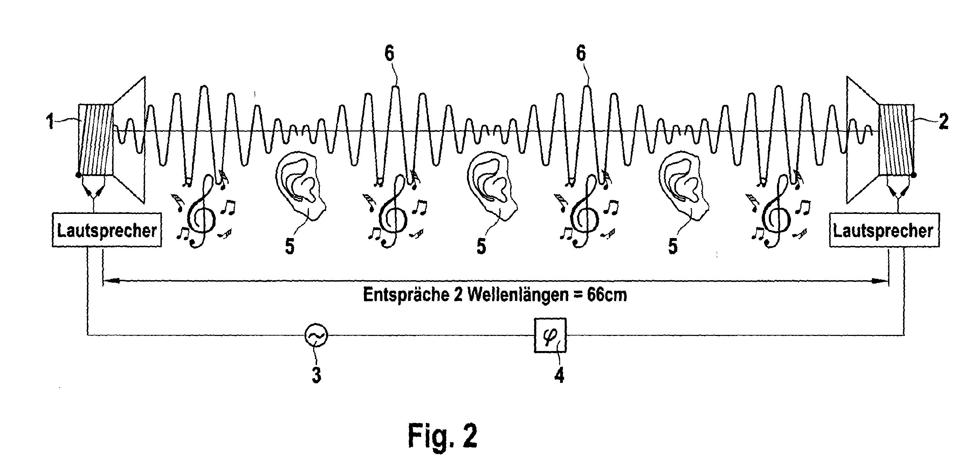

Figur 1 zeigt zwei gegenphasige Sinustöne der gleichen Frequenz. Solche gegenphasigen Sinustöne lassen sich, wie Figur 2 zeigt, durch zwei in definiertem Abstand zueinander gerichtete Lautsprecher 1 und 2 erzeugen, die im einfachsten Fall von einem gemeinsamen Generator 3 erzeugt werden, wobei im Signalweg eines der Lautsprecher ein 180°-Phasenschieber angeordnet werden kann. Die Gegenphasigkeit kann auch allein schon durch Reflexion der Schallwelle erreicht werden. Die Überlagerung der gegenphasigen Sinustöne zu einer stehenden Welle zeigt ebenfalls Figur 2. Der Kopf des Fahrers wird nun in dieser stehenden Welle derart zwischen den Lautsprechern 1 und 3 positioniert, dass bei einer Sollposition die Ohren 5 des Fahrers im Schwingungsknoten der stehenden Welle - geringste Amplitude - zu liegen kommen. In dieser Sollposition nimmt der Fahrer keinen Sinuston wahr. Wird der Fahrer nun so müde, dass er den Kopf nicht mehr halten kann und dieser nach vorne oder zur Seite kippt, befinden sich seine Ohren außerhalb der Schwingungsknoten und er nimmt den Sinuston als Warnsignal wahr und wacht auf. Vorzugsweise wird ein Sinuston mit einer Frequenz von 1 KHz verwendet, da hier das menschliche Ohr am empfindlichsten ist (dBA-Kurve). Bei dieser Frequenz ist gegenüber der Sollposition im Abstand von 8,25 cm ein Schwingungsbauch 6, wo der Sinuston/Warnsignal am lautesten ist (in Figur 2 symbolisiert durch Notenschlüssel und Noten). Eine zu berücksichtigende Störgröße ist der Körperschall, der durch die Einbringung des Kopfes in die stehende Welle erfolgt. Da die Ausbreitungsgeschwindigkeit des Schalls im Kopf deutlich größer ist als in Luft, muss der Abgleich der Sollposition, d.h. die Lage des Kopfes bezüglich der Anbringung der Lautsprecher 1, 2 entsprechend berücksichtigt/korrigiert werden. Die Schwingungsknoten am Ohr bleiben bei der Einbringung des Kopfes in die stehende Welle.

Die Erreger der stehenden Welle, d.h. die im Ausführungsbeispiel gezeigten Lautsprecher 1 und 2 können in der Fahrerkopfstütze des Fahrzeugs oder in deren Bereich angeordnet sein. Es kann vorteilhaft sein, einen der Lautsprecher auch in die fahrernahe B-Säule zu integrieren und den anderen in die Fahrerkopfstütze oder Beifahrerkopfstütze zu integrieren. Zusätzliche Befestigungsvorrichtungen für die Lautsprecher 1 und 2 können damit eingespart werden.

Anstelle eines Sinustones kann auch ein Tongemisch oder Geräusch verwendet werden, das zu einer erhöhten Aufmerksamkeit und zum Aufwachen des Fahrers außerhalb der Sollposition führt.

Wird die Frequenz der stehenden Welle verändert, ergibt sich eine andere Wellenlänge und damit andere Knotenorte. Dies erfordert dann einen Neuabgleich der Sollposition, d.h. die Schwingungsknoten erscheinen an anderen Orten und die Position der Ohren bezüglich den beiden Schallquellen muss dann geändert werden.

## Patentansprüche

1. Verfahren zur Warnung des Fahrers in Abhängigkeit des Fahrerzustandes **gekennzeichnet durch** folgende Schritte:
- Erzeugung einer stehenden akustischen Welle,
- Positionieren des Kopfes des Fahrers in den Bereich der stehenden Welle und zwar derart, dass bei einer Sollposition des Kopfes die Ohren (5) des Fahrers in Schwingungsknoten der stehenden akustischen Welle zu liegen kommen und bei Abweichung der Kopfposition von der Sollposition ein akustisches Warnsignal **durch** die stehende Welle vom Fahrer wahrnehmbar ist.

2. Verfahren nach Anspruch 1, **dadurch gekennzeichnet, dass** zur Erzeugung der stehenden akustischen Welle zwei Lautsprecher (1, 2) in einem definierten Abstand insbesondere von einem Sinuston angesteuert werden.

3. Verfahren nach Anspruch 1 oder 2, **dadurch gekennzeichnet, dass** die akustisch stehende Welle bzw. der Sinuston mit einer Frequenz erzeugt wird, bei der das menschliche Ohr am empfindlichsten ist.

4. Verfahren nach einem der Ansprüche 1 bis 3, **dadurch gekennzeichnet dass** zum Abgleich der Sollposition des Kopfes der Körperschall, der durch Einbringung des Kopfes in die stehende Welle als Störgröße auftritt, berücksichtigt wird.

5. Anordnung zur Warnung des Fahrers in Abhängigkeit des Fahrerzustandes **gekennzeichnet durch** folgende Merkmale:
- einem Errgersystems (1, 2) zur Erzeugung einer akustischen stehenden Welle,
- einer Positionierung des Erregersystems (1, 2) bezüglich einer Sollposition des Kopfes (5) des Fahrers derart, dass bei der Sollposition die Ohren (5) des Fahrers im Schwingungsknoten der stehenden Welle zu liegen kommen und bei Abweichen von der Sollposition ein akustisches Warnsignal **durch** die stehende Welle vom Fahrer wahrnehmbar ist.

6. Anordnung nach Anspruch 5, **dadurch gekennzeichnet, dass** das Erregersystem aus zwei mit einem akustischen Signal, insbesondere einem Sinuston beaufschlagbaren Lautsprechern (1, 2) besteht.

7. Anordnung nach einem der Ansprüche 5 oder 6, **dadurch gekennzeichnet, dass** das akustische Signal eine Frequenz aufweist, bei der das menschliche Ohr besonders empfindlich ist.

8. Anordnung nach einem der Ansprüche 5 bis 7, **dadurch gekennzeichnet, dass** für die Lage der Erreger (1,2) der stehenden Welle bzw. Lautsprecher und/oder deren gegenseitiger Abstand in Bezug auf die Sollposition des Kopfes der Körperschall, der durch Einbringung des Kopfes in die stehende Welle als Störgröße auftritt, berücksichtigt ist.

9. Anordnung nach einem der Ansprüche 5 bis 8, **dadurch gekennzeichnet, dass** die Erreger der stehenden Welle bzw. die Lautsprecher (1, 2) in der Fahrerkopfstütze des Fahrzeugs oder in deren Bereich angeordnet sind.

10. Anordnung nach einem der Ansprüche 5 bis 8, **dadurch gekennzeichnet, dass** ein Erreger für die stehende Welle bzw. Lautsprecher (1, 2) in der fahrernahen B-Säule und ein dazugehöriger zweiter Erreger bzw. Lautsprecher in einer Fahrzeugkopfstütze angeordnet ist.

## Claims

1. Method for warning the driver on the basis of the driver state, **characterized by** the following steps:
- a standing acoustic wave is produced,
- the head of the driver is positioned into the region of the standing wave, specifically such that when the head is in a target position the ears (5) of the driver come to rest at nodes of oscillation of the standing acoustic wave and when the head position differs from the target position an audible warning signal can be perceived by the driver through the standing wave.

2. Method according to Claim 1, **characterized in that** the standing acoustic wave is produced by actuating two loudspeakers (1, 2) at a defined interval, particularly using a sinusoidal tone.

3. Method according to Claim 1 or 2, **characterized in that** the acoustic standing wave or the sinusoidal tone is produced at a frequency at which the human ear is most sensitive.

4. Method according to one of Claims 1 to 3, **characterized in that** the target position of the head is aligned by taking account of the structure-borne noise which occurs as a disturbance variable as a result of the head being introduced into the standing wave.

5. Arrangement for warning the driver on the basis of the driver state, **characterized by** the following features:
- an exciter system (1, 2) for producing an acoustic standing wave,
- positioning of the exciter system (1, 2) relative to a target position of the head (5) of the driver such that in the target position the ears (5) of the driver come to rest at nodes of oscillation of the standing wave and when there is a difference from the target position an audible warning signal can be perceived by the driver through the standing wave.

6. Arrangement according to Claim 5, **characterized in that** the exciter system comprises two loudspeakers (1, 2) to which an audible signal, particularly a sinusoidal tone, can be applied.

7. Arrangement according to one of Claims 5 and 6, **characterized in that** the audible signal has a frequency at which the human ear is particularly sensitive.

8. Arrangement according to one of Claims 5 to 7, **characterized in that** the structure-borne noise which occurs as a disturbance variable as a result of the head being introduced into the standing wave is taken into account for the position of the exciters (1, 2) of the standing wave, or loudspeakers, and/or the interval between them in relation to the target position of the head.

9. Arrangement according to one of Claims 5 to 8, **characterized in that** the exciters of the standing wave, or the loudspeakers (1, 2), are arranged in the driver's headrest of the vehicle or in the region thereof.

10. Arrangement according to one of Claims 5 to 8, **characterized in that** one exciter for the standing wave, or loudspeaker (1, 2), is arranged in the driver's B pillar and an associated second exciter or loudspeaker is arranged in a vehicle headrest.

## Revendications

1. Procédé d'avertissement du conducteur en fonction de l'état du conducteur, **caractérisé par** les étapes suivantes :
- formation d'une onde acoustique stationnaire,
- placement de la tête du conducteur dans la zone occupée par l'onde stationnaire de telle sorte que lorsque la tête est en position de consigne, les oreilles (5) du conducteur viennent se placer dans les noeuds de vibration de l'onde acoustique stationnaire et que lorsque la position de la tête s'écarte de sa position de consigne, un signal acoustique d'avertissement peut être perçu par le conducteur grâce à l'onde stationnaire.

2. Procédé selon la revendication 1, **caractérisé en ce que** deux haut-parleurs (1, 2) situés à une distance définie sont commandés en particulier par un son sinusoïdal pour produire l'onde acoustique stationnaire.

3. Procédé selon les revendications 1 ou 2, **caractérisé en ce que** l'onde acoustique stationnaire ou le son sinusoïdal sont produits à une fréquence à laquelle l'oreille humaine est la plus sensible.

4. Procédé selon l'une des revendications 1 à 3, **caractérisé en ce que** le son corporel qui intervient comme grandeur perturbatrice lorsque la tête est placée dans l'onde stationnaire est pris en compte pour régler la position de consigne de la tête.

5. Ensemble d'avertissement du conducteur en fonction de l'état du conducteur, **caractérisé par** les caractéristiques suivantes :
- un système d'excitation (1, 2) qui produit une onde acoustique stationnaire,
- un positionnement du système d'excitation (1, 2) par rapport à une position de consigne de la tête (5) du conducteur de telle sorte que lorsque la tête est en position de consigne, les oreilles (5) du conducteur viennent se placer dans des noeuds de vibration de l'onde stationnaire et que lorsqu'elles s'écartent de la position de consigne, un signal acoustique est perceptible par le conducteur grâce à l'onde stationnaire.

6. Ensemble selon la revendication 5, **caractérisé en ce que** le système d'excitation est constitué de deux haut-parleurs (1, 2) sur lesquels est appliqué un signal acoustique et en particulier un son sinusoïdal.

7. Ensemble selon l'une des revendications 5 ou 6, **caractérisé en ce que** le signal acoustique présente une fréquence à laquelle l'oreille humaine est particulièrement sensible.

8. Ensemble selon l'une des revendications 5 à 7, **caractérisé en ce que** le bruit corporel qui intervient comme grandeur perturbatrice lorsque la tête est placée dans l'onde stationnaire est pris en compte pour la position des excitateurs (1, 2) de l'onde stationnaire et des haut-parleurs et/ou pour leur distance mutuelle par rapport à la position de consigne de la tête.

9. Ensemble selon l'une des revendications 5 à 8, **caractérisé en ce que** les excitateurs de l'onde stationnaire et les haut-parleurs (1, 2) sont disposés dans l'appuie-tête du conducteur du véhicule ou dans la zone occupée par cet appuie-tête.

10. Ensemble selon l'une des revendications 5 à 8, **caractérisé en ce qu'**un excitateur de l'onde stationnaire et un haut-parleur (1, 2) sont disposés dans la colonne B proche du conducteur et un deuxième excitateur et le haut-parleur associé dans un appuie-tête du véhicule.
